# FASCICULE DE BREVET EUROPEEN

(11) **EP 1 357 341 B1**
(45) Date de publication et mention de la délivrance du brevet: **23.08.2006**
(21) Numéro de dépôt: 03290961.6
(22) Date de dépôt: 17.04.2003
(51) Int. Cl.: F25J 3/02, G01N 1/10

(54) **Procédé et installation d'échantillonage de liquides cryogéniques, ainsi qu'une unité de séparation d'air pourvue d'une telle installation**
Verfahren und kryogene Flüssigkeiten Probenahmeeinrichtung, sowie Luftzerlegungsanlage mit solcher Einrichtung
Process and cryogenic liquids sampling installation, such as air separation plant with such an installation

(30) Priorité: 25.04.2002 FR 0205216
(43) Date de publication de la demande: 29.10.2003
(73) Titulaire: L'AIR LIQUIDE S.A., 75321 Paris Cédex 07 (FR)
(72) Inventeur: Meneses, David, 75015 Paris (FR); Thonnelier, Jean-Yves, 78960 Voisins le Bretonneux (FR); Lehman, Jean-Yves, 94700 Maisons Alfort (FR)
(74) Mandataire: Mercey, Fiona Susan

(56) Documents cités:
- EP-A- 0 275 029
- EP-A- 0 345 164
- EP-A- 0 726 434
- FR-A- 1 329 313
- FR-A- 2 637 982
- FR-A- 2 786 858
- US-A- 4 631 967
- US-A- 5 161 381
- US-A- 5 195 325
- US-A- 5 629 208

## Description

La présente invention concerne un procédé et une installation d'échantillonnage de liquides cryogéniques, ainsi qu'une unité de séparation d'air pourvue d'au moins une telle installation.

De tels liquides cryogéniques, qui sont habituellement de l'oxygène, de l'azote ou encore de l'argon, possèdent une température inférieure à environ -170°C. Ils se trouvent notamment produits par la mise en oeuvre d'une colonne de distillation appartenant à une unité de séparation d'air.

Il est connu de réaliser des échantillonnages de ces liquides cryogéniques, en vue de leur analyse ultérieure. Ceci permet alors de contrôler notamment la teneur en impuretés peu volatiles de ces liquides, telles que le protoxyde d'azote N₂O, le dioxyde de carbone CO₂ ou les hydrocarbures CₙHₘ.

En effet, aux températures cryogéniques, certaines de ces impuretés sont susceptibles de se déposer dans les éléments constitutifs des unités de séparation d'air, en particulier dans le vaporiseur-condenseur des colonnes de distillation. Le contrôle de la teneur en impuretés est donc indispensable, tant en termes de qualité des produits, que de sécurité des installations.

Lorsqu'on s'intéresse à l'analyse d'impuretés peu volatiles, la difficulté réside dans l'obtention d'un échantillon vaporisé, qui soit aussi représentatif que possible du liquide à analyser.

En effet, les méthodes d'analyse couramment utilisées, telles que la chromatographie en phase gazeuse ou la spectrométrie infra rouge, impliquent un réchauffement de l'échantillon prélevé jusqu'à une température voisine de l'ambiante. A cet effet, il est nécessaire de vaporiser tout d'abord le liquide cryogénique échantillonné, puis de le réchauffer.

Dans ces conditions, pour aboutir à une analyse représentative d'un bain de liquide cryogénique, il convient d'une part d'en prélever un échantillon liquide représentatif de la composition moyenne de l'ensemble du bain, puis de le vaporiser de manière rapide et complète.

Dans le cas de l'unité de séparation d'air, on connaît notamment deux modes d'échantillonnage de liquides cryogéniques.

Le premier de ceux-ci, encore dénommé ascenseur liquide, est fondé sur l'effet thermosiphon. Pour ce faire, on réalise une dérivation, ou « by-pass », du liquide à analyser, dans laquelle la circulation est assurée par la vaporisation d'une fraction de ce liquide.

Cet ascenseur liquide se trouve déporté en paroi de la boîte froide de l'unité de séparation d'air, au sein d'un caisson isolé, par exemple par de la laine de roche, afin de limiter les entrées thermiques. Un prélèvement continu du liquide cryogénique circulant dans cet ascenseur se trouve alors vaporisé dans un échangeur atmosphérique à ailettes, associé à un mélangeur, qui est communément appelé « vapo-flash ».

Un mode de prélèvement alternatif, encore dénommé prise capillaire, consiste à soutirer le liquide sous pression à travers un capillaire, à savoir un premier tube de faible diamètre intérieur, par exemple voisin de 0,5 mm. Puis, il s'agit d'acheminer ce liquide dans un second tube, de section plus importante, jusqu'à un point chaud assurant une vaporisation instantanée de la totalité du liquide à analyser.

Ces systèmes connus de prélèvement sont largement répandus, et garantissent des résultats globalement satisfaisants. Cependant, ils impliquent certains inconvénients.

Ainsi, ils peuvent induire un problème de représentativité de l'échantillon prélevé, en particulier en ce qui concerne la prise capillaire. En effet, cette dernière, si elle est raccordée à un bain de liquide, ne permet pas la circulation forcée dudit liquide à analyser.

Par ailleurs, ces systèmes sont sujets au vieillissement, en particulier en ce qui concerne l'ascenseur liquide.

En effet, dans le cas de ce dernier, l'humidité pénètre progressivement dans le caisson d'isolation, ce qui provoque la formation, puis l'accumulation de glace. Les entrées de chaleur deviennent alors telles que la circulation liquide peut en être affectée.

Dans ces conditions, l'invention se propose de mettre en oeuvre un procédé permettant d'échantillonner, de manière fiable, un liquide cryogénique, tout en faisant appel à une installation ne requérant qu'une faible maintenance.

FR-A-1329313 décrit un procédé selon le préambule de la revendication 1 et prévoit la vaporisation du liquide cryogénique par échange de chaleur avec un fluide chaud.

A cet effet, elle a pour objet un procédé selon la revendication 1.

Selon d'autres caractéristiques de l'invention :
- on prélève le ou chaque liquide cryogénique en aval d'une pompe, avant de le faire circuler dans la ligne de prélèvement ;
- on prélève le ou chaque liquide cryogénique dans une ligne de purge, s'étendant à partir d'un bain du ou de chaque liquide, avant de le faire circuler dans la ligne de prélèvement ;
- on maintient également les parois de la zone de raccordement, destinées à entrer en contact avec le ou chaque liquide cryogénique, à une température supérieure à la température de sublimation ou de vaporisation de l'impureté la moins volatile contenue dans le liquide ;
- on maintient les parois du vaporiseur et, le cas échéant, les parois de la zone de raccordement, à une température supérieure à -70°C ;
- en aval du vaporiseur, on fait séjourner la phase gazeuse, dans une capacité de mélange.
- on contrôle le débit de la phase gazeuse en déterminant une plage de débit de liquide cryogénique optimale à l'égard de la ligne de prélèvement et/ou du vaporiseur, on convertit cette plage optimale en une plage préférée de débit gazeux et on maintient le débit gazeux instantané, provenant du vaporiseur, dans cette plage préférée de débit gazeux.
- on fait séjourner la phase gazeuse dans cette capacité de mélange pendant au moins 10 secondes.
- le liquide se vaporise totalement dans le vaporiseur.
- on fait circuler le ou chaque liquide cryogénique au sein d'une ligne de prélèvement (8 ; 18), de préférence de sorte que le ou chaque liquide parcourt la ligne de manière globalement ascendante
- on isole thermiquement cette ligne de prélèvement
- on contrôle le débit de ladite phase gazeuse
- le taux de vaporisation dans la ligne de prélèvement est inférieur à 50%.

Selon un autre objet de l'invention, il est prévu une installation selon la revendication 4.

Le terme « l'air libre » désigne l'atmosphère.

Selon d'autres caractéristiques de l'invention :
- les moyens d'isolation thermique de la ligne de prélèvement comprennent au moins une couche d'isolant cryogénique ;
- les moyens d'isolation thermique de la ligne de prélèvement comprennent une ligne de garde, disposée autour de cette ligne de prélèvement, et dans laquelle circule un autre fluide cryogénique permettant d'absorber les entrées thermiques ;
- la ligne de prélèvement est une ligne isolée sous vide ;
- le vaporiseur est un échangeur à plaques, pourvu d'ailettes internes et, éventuellement, d'ailettes externes ;
- le vaporiseur est un échangeur tubulaire, pourvu d'ailettes intérieures et, éventuellement, d'ailettes extérieures ;
- l'installation comprend en outre des moyens de mélange de la phase gazeuse, disposés en aval du vaporiseur, notamment une capacité de mélange ;
- les moyens de contrôle du débit de la phase gazeuse comprennent un régulateur de débit massique ;
- le vaporiseur comprend des obstacles à l'écoulement vertical, de préférence ne permettant pas l'accumulation de liquide ;
- les obstacles font partie intégrante de ou sont en contact thermique avec les parois du vaporiseur.

L'invention a enfin pour objet une unité de séparation d'air, comprenant au moins une colonne de distillation, à partir de laquelle s'étend au moins une ligne de circulation d'au moins un liquide cryogénique, caractérisée en ce qu'au moins une ligne de circulation est mise en communication avec une installation d'échantillonnage telle que définie ci-dessus.

Selon une autre caractéristique de l'invention, la ligne de circulation est située en aval d'une pompe, ou la ligne de circulation est une ligne de purge.

L'invention sera mieux comprise à la lecture de la description qui va en être faite de différentes formes de réalisations, données à titre d'exemples non limitatifs, en relation avec les dessins annexés, sur lesquels :
- la figure 1 est une vue schématique, illustrant une unité de séparation d'air pourvue d'une installation d'échantillonnage de liquides cryogéniques conforme à l'invention ;
- la figure 2 est une vue schématique, à plus grande échelle, illustrant un autre mode de prélèvement de liquide cryogénique ;
- la figure 3 est une vue en perspective, illustrant un premier mode de réalisation d'un vaporiseur appartenant à l'installation de la figure 1 ;
- la figure 4 est une vue en coupe transversale, illustrant un deuxième mode de réalisation d'un vaporiseur appartenant à l'installation de la figure 1La figure 5 est une vue en coupe transversale, illustrant une variante de réalisation du vaporiseur de la figure 3
- la figure 6 est une vue en coupe longitudinale illustrant le vaporiseur de la figure 4 et
- la figure 7 est une variante du vaporiseur de la figure 3.

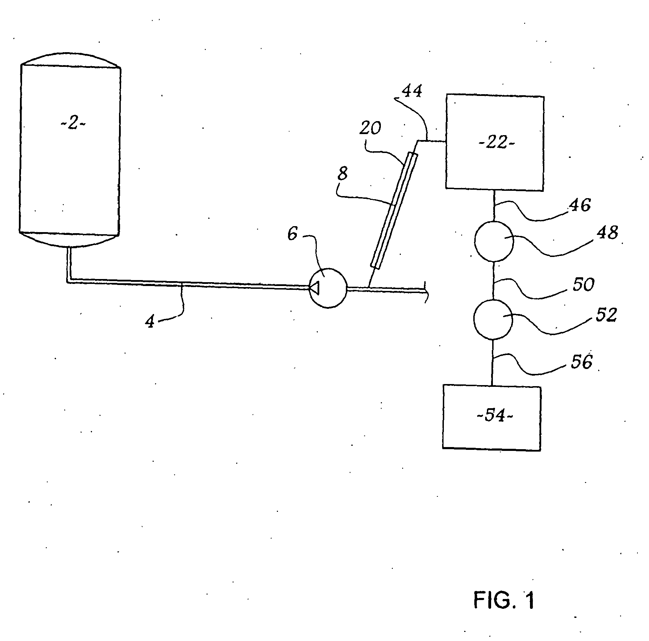

La figure 1 illustre, de façon partielle, une unité de séparation d'air, de type connu.

Cette unité comprend notamment une colonne de distillation 2, à partir de laquelle s'étend une conduite de sortie 4, dans laquelle circule un liquide cryogénique, par exemple de l'oxygène. A titre de variante, cette conduite est susceptible d'acheminer un autre type de liquide cryogénique, en particulier de l'azote.

La conduite 4 est pourvue d'une pompe 6, assurant la production ou la recirculation. En aval de cette pompe 6 est prévue une ligne 8, permettant le prélèvement du liquide cryogénique circulant dans la conduite 4.

Une telle disposition de la ligne de prélèvement 8, en aval de la pompe 6, est avantageuse. En effet, cette zone aval est la plus appropriée pour effectuer un tel prélèvement, étant donné que le débit de fluide qui y circule est important, que sa pression est élevée, et que ce liquide se trouve sous-refroidi.

En effet, étant donnée l'action de pompage, le liquide cryogénique se trouve à une température inférieure à sa propre température d'équilibre. De la sorte, ce sous-refroidissement réduit les risques de vaporisation accidentelle, non désirée, du liquide cryogénique, et améliore de ce fait la qualité de l'échantillonnage.

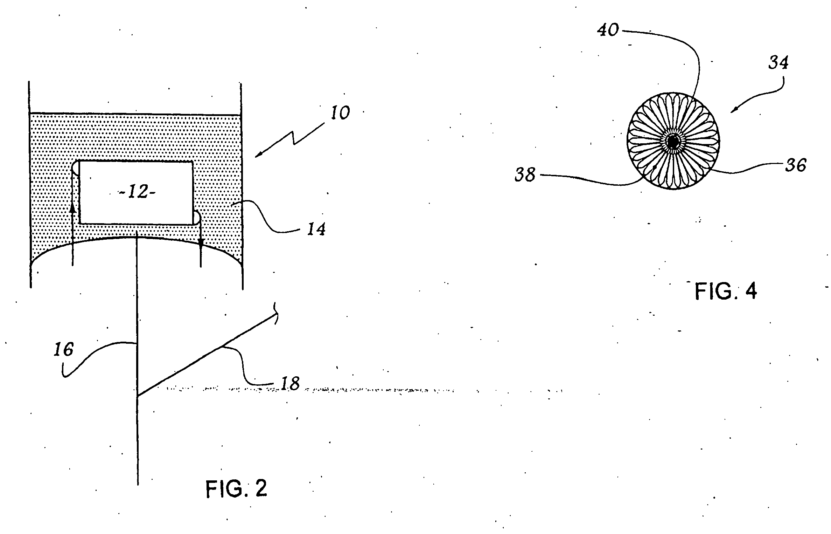

La figure 2 illustre une variante de réalisation, concernant la disposition de cette ligne de prélèvement.

Sur cette figure 2, on a représenté, de façon schématique, un vaporiseur-condenseur 10 appartenant à la colonne de distillation 2. Ce vaporiseur-condenseur, connu en soi, est pourvu d'un échangeur 12, qui est immergé dans un bain 14 d'oxygène liquide.

Comme cela est connu en soi, une ligne de purge 16, assurant la déconcentration du bain 14 en impuretés peu volatiles, s'étend vers le bas, à partir du fond de ce bain. Il est alors possible de piquer une ligne de prélèvement 18, analogue à celle 8 décrite à la figure 1, sur cette ligne de purge 16.

Le mode de réalisation de la figure 2 est avantageux, dans la mesure où le liquide circulant dans la ligne de purge 16 est représentatif du bain 14 à analyser. Par ailleurs, étant donné que cette ligne de purge 16 se trouve placée au fond du bain, le liquide qui s'y écoule se trouve également sous-refroidi, grâce à l'influence de la pression hydrostatique.

En se reportant à nouveau à la figure 1, la ligne de prélèvement 8 est ascendante, en faisant référence à la direction d'écoulement du liquide, matérialisée par la flèche f.

Un tel agencement de la ligne de prélèvement est avantageux, étant donné qu'il évite l'existence de points bas, lors de l'acheminement du liquide jusqu'au vaporiseur, qui sera décrit dans ce qui suit. Ceci permet ainsi d'éviter des accumulations de dépôts d'impuretés sous forme solide ou liquide, puisque le front liquide/gaz est minimisé.

La ligne de prélèvement 8 est par ailleurs pourvue de moyens d'isolation thermique, matérialisés par la référence 20.

Ces moyens d'isolation peuvent consister en une isolation cryogénique simple, par exemple formée d'une ou plusieurs couches de mousse isolante, associée à une gaine isolante.

A titre de variante, il peut être envisagé d'utiliser un liquide de garde. Dans ce cas, la ligne de prélèvement 8 est entourée par un fourreau périphérique, non représenté sur cette figure 1, dans lequel circule un autre liquide cryogénique, destiné à absorber les entrées thermiques.

A titre de variante supplémentaire, la ligne de prélèvement 8 peut être réalisée sous forme d'une ligne isolée sous vide, de façon connue en soi.

Il convient de noter que les différents modes de réalisation, décrits ci-dessus en référence à la ligne de prélèvement 8 de la figure 1, peuvent être appliqués de façon analogue à la ligne de prélèvement 18, illustrée sur la figure 2.

En faisant à nouveau référence à la figure 1, on dirige le liquide cryogénique, prélevé par la ligne 8, vers un vaporiseur 22.

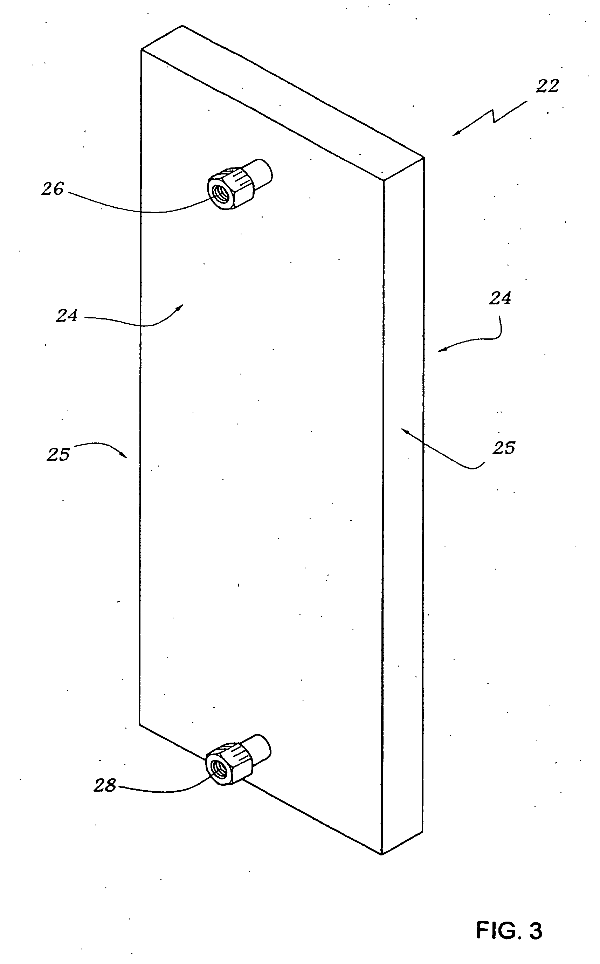

Ce dernier, qui est illustré plus précisément sur la figure 3, est un échangeur à plaques, réalisé en aluminium brasé, dont la technologie est communément utilisée dans l'industrie cryogénique.

Cet échangeur 22 comprend deux plaques principales 24, définissant un volume intérieur V de passage du liquide cryogénique, avec des plaques latérales 25. Ce vaporiseur 22 est en outre pourvu d'au moins une entrée 26 de liquide, en partie supérieure, ainsi que d'au moins une sortie 28 de gaz, en partie inférieure, pour conférer au liquide compris dans le volume V une circulation verticale descendante.

Des ondes internes disposées dans le volume intérieur V, font obstacle au passage direct du liquide de haut en bas, et permettent de transférer efficacement la chaleur transmise par les plaques principales 24. Ainsi, le liquide se vaporise sensiblement de façon intégrale, lors de sa descente.

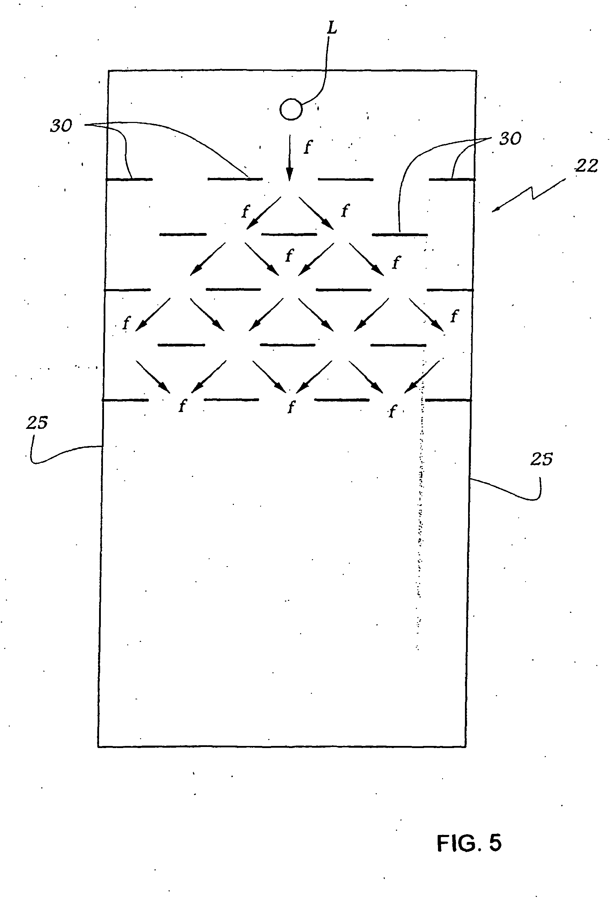

Comme le montre la figure 5, ces ondes internes 30 sont de type à décalage partiel (« SERRATED »), en position « HARDWAY », et définissent une structure d'ailettes horizontales en quinconce. Cette structure assure la division d'une goutte de liquide entrant L en une multiplicité de gouttelettes, selon les flèches f, lesquelles vont se vaporiser en descendant, sans possibilité d'accumulation de poche de liquide.

En revenant à la figure 3, les plaques 24 du vaporiseur 22 sont être pourvues d'ailettes extérieures non représentées, de forme appropriée, afin d'augmenter l'échange thermique avec l'air ambiant. Cependant, il convient de tenir compte du risque de colmatage de ces ailettes extérieures par le givre.

Conformément au procédé de l'invention, on maintient les parois de l'échangeur 22, destinées à entrer en contact avec le liquide à vaporiser, à une température supérieure à la température de sublimation, ou de vaporisation, de l'impureté la moins volatile contenue dans ce liquide cryogénique.

En effet, les gouttes de liquides contenant les impuretés à analyser sont constituées de molécules plus volatiles que ces différentes impuretés. Leur vaporisation, au sein de l'échangeur 22, risque donc d'entraîner la formation de dépôts solides, sous forme de cristaux, ou de dépôts liquides, qui ont tendance à s'accumuler sur les parois internes de l'échangeur.

Dans ces conditions, si ces parois sont maintenues à une température suffisamment élevée, ceci provoque alors la sublimation des dépôts solides, ou bien la vaporisation des dépôts liquides. De la sorte, l'accumulation de tels dépôts est évitée, ce qui garantit une bonne qualité de l'analyse, effectuée en aval de l'échangeur 22.

Afin de maintenir les parois précitées dans la gamme de température évoquée ci-dessus, différentes solutions peuvent être envisagées.

Ainsi, il est tout d'abord possible de concevoir l'agencement proprement dit de l'échangeur, ou « design », de manière que, par simple échange avec l'atmosphère, ses parois soient en permanence placées dans une telle gamme de température.

Selon une alternative, il est également envisageable d'apporter, de manière extérieure, de la chaleur à l'échangeur 22, par exemple dans des régions très froides et/ou très humides. Dans cette optique, il est possible de faire circuler de manière forcée, autour de l'échangeur 22, un gaz sec et préchauffé, ou encore de chauffer les parois de cet échangeur par un dispositif électrique.

A titre d'exemple non limitatif, lorsque les impuretés présentes dans le liquide cryogénique sont par exemple le protoxyde d'azote N₂O, le dioxyde de carbone CO₂ et des hydrocarbures CₙHₘ, il convient de porter avantageusement la température des surfaces (parois et/ou ailettes) de l'échangeur, en contact avec le liquide, à une valeur supérieure à environ - 70°C.

A titre de variante, on peut utiliser d'autres types d'échangeurs que celui illustré à la figure 3.

Ainsi, il est possible de faire appel à un système de vaporisation, dénommé « vapo-flash », de type connu en soi.

Il est également envisageable d'utiliser un échangeur tubulaire 34, visible sur la figure 4.

Cet échangeur 34 comprend un tube principal 36, délimitant un volume intérieur V' de passage du liquide cryogénique.

Ce volume V' est partiellement occupé par des ailettes internes 38, en forme de bouclettes, qui s'étendent à partir du tube 36, autour d'une tige centrale 40. Par ailleurs, des ailettes externes, non représentées, peuvent être également prévues, de façon avantageuse.

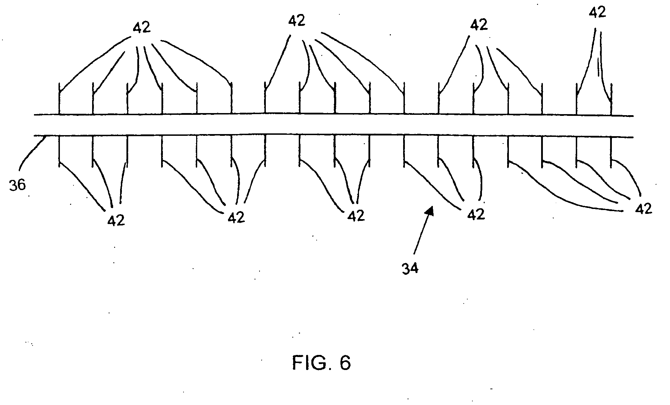

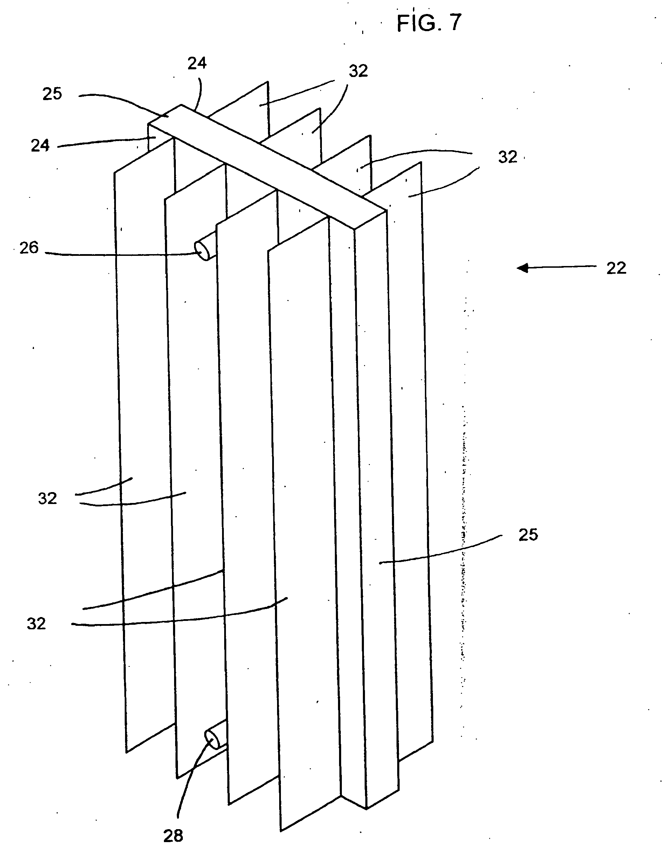

Il convient de noter que, dans les Figures 6 et 7 non seulement l'échangeur à plaques 22, mais encore l'échangeur tubulaire 34 sont munis d'ailettes extérieures, respectivement 32 et 42. Lors du dimensionnement de ces ailettes, il convient de s'assurer que leur espacement est tel qu'il empêche la formation d'une couche massive de glace. Comme on voit dans la Figure 6, l'échangeur tubulaire est à l'air libre et est incliné vers le bas dans le sens de l'écoulement de liquide qui est introduit en haut de l'échangeur. L'échangeur de la Figure 7 est également à l'air libre.

En faisant à nouveau référence à la figure 1, il s'agit de faire s'écouler le liquide cryogénique dans le vaporiseur 22, selon une direction globalement verticale et un sens descendant.

Cette mesure permet d'éviter que plusieurs gouttes successives de liquide cryogénique n'entrent mutuellement en contact. Ceci permet donc de s'affranchir d'un enrichissement de certaines gouttes en composés peu volatiles, tels que le protoxyde d'azote N₂O ou le dioxyde de carbone CO₂.

De la sorte, les pics de teneurs de ces impuretés sont évités, ce qui garantit une analyse fiable.

Comme illustré sur la figure 1, on affecte de la référence 44 la zone de raccordement mettant en communication la ligne de prélèvement 18 et le vaporiseur 22.

Il s'agit d'une zone relativement délicate, en ce qui concerne la maintenance de l'installation d'échantillonnage. En effet, des impuretés solides sont plus particulièrement susceptibles de se former ou de se déposer dans cette zone 44.

Afin de s'affranchir de tels risques, il est avantageux de maintenir les parois de cette zone de raccordement 44 à une température supérieure à la température de sublimation, ou de vaporisation, de l'impureté la moins volatile contenue dans le liquide cryogénique.

Une telle mesure peut être mise en oeuvre, conformément à ce qui a été décrit ci-dessus en ce qui concerne les parois du vaporiseur 22.

Ainsi, l'agencement de la zone de raccordement 44 peut être conçu de façon appropriée, de manière à éviter la présence de zones où le fluide stagne, ou revient sur lui-même. Dans cette optique, il est avantageux de faire appel à une entrée de liquide affleurante.

Une autre possibilité consiste à réaliser, au moins en partie, cette zone de raccordement 44 en un matériau ayant une forte conductivité thermique.

Toujours en référence à la figure 1, l'extrémité aval du vaporiseur 22 est mise en communication, par une conduite 46, avec une capacité de mélange 48.

Il est avantageux de faire séjourner, dans cette capacité, la fraction vaporisée provenant de l'échangeur 22, par exemple pendant une durée d'au moins 10 secondes. Ceci permet en effet de réduire les fluctuations du signal d'analyse, inhérentes à la sublimation discrète des dépôts solides, ou à la vaporisation discrète des dépôts liquides.

A titre d'alternative, si l'on ne fait pas appel à une telle capacité 48, il convient de lisser le signal obtenu par l'appareil d'analyse.

En aval de la capacité 48 est prévue une ligne 50, débouchant dans un appareil 52 de régulation du débit de gaz, s'écoulant en aval de l'échangeur 22.

Un tel dispositif est, de façon avantageuse, constitué par un régulateur de débit massique. A titre de variante, on peut également faire par exemple appel à un rotamètre.

Selon le procédé de l'invention, on détermine tout d'abord une plage de débit liquide, pour laquelle les performances de la ligne de prélèvement 18 et du vaporiseur 22 sont optimales. Puis, on convertit cette plage de débit liquide en une plage préférée de débit gazeux et on régule, par le dispositif 52, le débit provenant du vaporiseur 22, afin qu'il reste dans cette plage préférée.

Un tel contrôle du débit gazeux est relativement aisé à mettre en oeuvre. Par ailleurs, il garantit une efficacité satisfaisante de la vaporisation du liquide cryogénique, ce qui confère une grande qualité à l'analyse ultérieure.

A titre d'exemple non limitatif, on maintient avantageusement le débit de la fraction gazeuse vaporisée, admise en aval de l'échangeur 22, dans une plage comprise entre 500 et 1000 Nl/h.

Enfin, en aval du régulateur de débit 52, on dirige le flux gazeux vers au moins un analyseur 54, via une ligne 56. Une telle analyse est conduite de façon connue en soi.

Il convient de noter que le débit gazeux est dimensionné par un temps de parcours souhaité de l'échantillon, et non par le besoin du ou des analyseur(s). Une mise à l'air sécuritaire du débit excédentaire peut à cet égard être prévue.

## Revendications

1. Procédé d'échantillonnage d'au moins un liquide cryogénique, notamment de l'oxygène ou de l'azote, contenant des impuretés telles que le protoxyde d'azote, le dioxyde de carbone ou des hydrocarbures, comprenant les étapes suivantes :
- on admet le ou chaque liquide cryogénique dans un vaporiseur (22 ; 34), qui communique avec la ligne de prélèvement par une zone de raccordement (44), de sorte que le ou chaque liquide cryogénique traverse le vaporiseur de manière globalement descendante
- on évacue (par 46), en aval du vaporiseur (22 ; 34), une phase gazeuse provenant de la vaporisation du ou de chaque liquide cryogénique, cette phase gazeuse étant destinée à être dirigée au moins en partie vers un analyseur (54) et
- le ou chaque liquide se vaporise dans le vaporiseur par échange de chaleur avec l'air libre
on maintient les parois de ce vaporiseur (22 ; 34), destinées à entrer en contact avec le
ou chaque liquide cryogénique, à une température supérieure à la température de sublimation ou de vaporisation de l'impureté la moins volatile contenue dans ce liquide **caractérisé en ce qu'**on augmente l'échange thermique entre les parois du vaporiseur et le liquide cryogénique au moyen d'éléments (30, 38) prévus à l'intérieur d'un volume intérieur (V ; V') de circulation du ou de chaque liquide cryogénique.

2. Procédé selon la revendication 1, **caractérisé en ce que** le liquide se vaporise totalement dans le vaporiseur.

3. Procédé selon l'une des revendications 1 ou 2 dans lequel on fait circuler le ou chaque liquide cryogénique au sein d'une ligne de prélèvement (8 ; 18), de préférence de sorte que le ou chaque liquide parcourt la ligne de manière globalement ascendante et/ou
- on isole thermiquement cette ligne de prélèvement et/ou
- on contrôle (par 52) le débit de ladite phase gazeuse.

4. Installation d'échantillonnage d'au moins un liquide cryogénique, notamment de l'oxygène ou de l'azote, contenant des impuretés telles que le protoxyde d'azote, le dioxyde de carbone ou des hydrocarbures, comprenant :
- une ligne de prélèvement (8 ; 18) à l'intérieur de laquelle est destiné à circuler le ou chaque liquide cryogénique, cette ligne de prélèvement pouvant être raccordée à une ligne (4 ; 16) de circulation du ou de chaque fluide cryogénique, et de préférence étant disposée de sorte que la circulation du liquide s'effectue de manière globalement ascendante, en faisant référence au sens d'écoulement (f) du liquide cryogénique,
- éventuellement des moyens (20) d'isolation thermique de cette ligne de prélèvement (8 ; 18),
- un vaporiseur (22 ;34), mis en communication avec la ligne de prélèvement (8 ; 18) de sorte que le ou chaque liquide transite le vaporiseur de manière globalement descendante,
- des moyens de maintien des parois de ce vaporiseur, destinées à entrer en contact avec le ou chaque liquide cryogénique, à une température supérieure à la température de sublimation ou de vaporisation de l'impureté la moins volatile contenue dans ce liquide, par échange de chaleur avec l'air libre,
- des moyens (46) d'évacuation, en aval du vaporiseur (22 ; 34), d'une phase gazeuse provenant de la vaporisation du ou de chaque liquide cryogénique, ces moyens d'évacuation pouvant être mis en communication avec un analyseur (54), et
des moyens (52) de contrôle du débit de cette phase gazeuse
**caractérisée en ce que** le vaporiseur (22 ; 34) est pourvu de moyens (32 ; 42) d'augmentation d'échange thermique entre ses parois et l'air libre et
**en ce que** les parois du vaporiseur (22 ; 34) définissent un volume intérieur (V ; V') de circulation du ou de chaque liquide cryogénique, et **en ce qu'**il est prévu, dans ce volume intérieur, des moyens (30, 38) permettant d'augmenter l'échange thermique entre le liquide cryogénique et ces parois.

5. Installation selon la revendication 4, **caractérisée en ce que** le vaporiseur comprend des obstacles à l'écoulement vertical (30), de préférence ne permettant pas l'accumulation de liquide.

6. Installation selon la revendication 5 dans laquelle les obstacles (30) font partie intégrante de ou sont en contact thermique avec les parois du vaporiseur.

7. Unité de séparation d'air, comprenant au moins une colonne de distillation (2), à partir de laquelle s'étend au moins une ligne (4 ; 16) de circulation d'au moins un liquide cryogénique et une installation d'échantillonnage conforme à l'une quelconque des revendications 4 à 6, au moins une desdites lignes de circulation étant mise en communication avec ladite installation d'échantillonnage.

8. Unité de séparation selon la revendication 7, **caractérisée en ce que** la ligne de circulation (4) est située en aval d'une pompe (6), ou **en ce que** la ligne de circulation (16) est une ligne de purge.

## Claims

1. Method for sampling at least one cryogenic liquid, particularly oxygen or nitrogen, containing impurities such as nitrous oxide, carbon dioxide or hydrocarbons, comprising the following steps:
- the or each cryogenic liquid is introduced into a reboiler (22;34), which communicates with the offtake line via a connecting zone (44), so that the or each cryogenic liquid passes through the reboiler as a general downflow,
- downstream of the reboiler (22;34), a gas phase coming from the vaporization of the or each cryogenic liquid is removed (via 46), to be sent at least partly to an analyzer (54) and
- the or each liquid vaporizes in the reboiler by heat exchange with the open air,
- the walls of this reboiler (22;34), for contacting with the or each cryogenic liquid, are maintained at a temperature above the sublimation or vaporization temperature of the least volatile impurity present in this liquid,
**characterized in that** the heat exchange between the reboiler walls and the cryogenic liquid is increased by means of elements (30,38) provided inside an internal volume (V; V') for flow of the or each cryogenic liquid.

2. Method according to Claim 1, **characterized in that** the liquid is completely vaporized in the reboiler.

3. Method according to either of Claims 1 and 2, in which the or each cryogenic liquid is made to flow in an offtake line (8;18), preferably so that the or each liquid passes through the line as a general upflow and/or
- this offtake line is thermally insulated and/or
- the flow of the said gas phase is controlled (by 52).

4. Installation for sampling at least one cryogenic liquid, particularly oxygen or nitrogen, containing impurities such as nitrous oxide, carbon dioxide or hydrocarbons, comprising:
- an offtake line (8;18) for flow of the or each cryogenic liquid, this offtake line being able to be connected to a line (4;16) for flow of the or each cryogenic fluid, and preferably being arranged so that the liquid flows as a general upflow, with reference to the flow direction (f) of the cryogenic liquid,
- optionally, means (20) for thermally insulating this offtake line (8;18),
- a reboiler (22;34), communicating with the offtake line (8;18) so that the or each liquid passes through the reboiler as a general downflow,
- means for securing the walls of this reboiler, with which walls the or each cryogenic liquid is intended to come into contact, at a temperature above the sublimation or vaporization temperature of the least volatile impurity present in this liquid, by heat exchange with the open air,
- downstream of the reboiler (22;34), means (46) for removing a gas phase coming from the vaporization of the or each cryogenic liquid, these removal means being able to be brought into communication with an analyzer (54), and
means (52) for controlling the flow of this gas phase,
**characterized in that** the reboiler (22;34) is provided with means (32;42) for increasing the heat exchange between its walls and the open air, and
**in that** the walls of the reboiler (22;34) define an internal volume (V;V') for flow of the or each cryogenic liquid, and **in that** means (30,38) are provided in this internal volume for increasing the heat exchange between the cryogenic liquid and these walls.

5. Installation according to Claim 4, **characterized in that** the reboiler includes obstacles to the vertical flow (30), preferably for preventing the holdup of liquid.

6. Installation according to Claim 5, in which the obstacles (30) are an integral part of or are in thermal contact with the reboiler walls.

7. A separation unit, comprising at least one distillation column (2), from which at least one line (4;16) for flow of at least one cryogenic liquid extends, and a sampling installation according to any one of Claims 4 to 6, at least one of the said circulating lines communicating with the said sampling installation.

8. Separation unit according to Claim 7, **characterized in that** the flow line (4) is located downstream of a pump (6), or **in that** the flow line (16) is a purge line.

## Patentansprüche

1. Verfahren zur Stichprobenentnahme mindestens einer Verunreinigungen wie z.B. Distickstoffoxid, Kohlenstoffdioxid oder Kohlenwasserstoffe enthaltenden kryogenen Flüssigkeit, insbesondere Sauerstoff oder Stickstoff, bestehend aus folgenden Schritten:
- die bzw. jede kryogene Flüssigkeit wird einem über einen Verbindungsabschnitt (44) mit der Entnahmelinie verbundenen Verdampfer (22; 34) zugeführt, sodass die bzw. jede kryogene Flüssigkeit den Verdampfer im Wesentlichen fallend durchläuft,
- nach dem Verdampfer (22; 34) wird eine Gasphase aus der Verdampfung der bzw. jeder kryogenen Flüssigkeit abgelassen (mit 46), wobei diese Gasphase mindestens teilweise einem Analysator (54) zugeführt wird und
- die bzw. jede Flüssigkeit verdampft im Verdampfer durch Wärmeaustausch mit der freien Luft;
die mit der bzw. jeder kryogenen Flüssigkeit in Berührung kommenden Wände des Verdampfers (22; 34) werden auf einer Temperatur gehalten, die höher ist als die Sublimations- bzw. Verdampfungstemperatur der in der Flüssigkeit enthaltenen am wenigsten flüchtigen Verunreinigung, **dadurch gekennzeichnet, dass** der Wärmeaustausch zwischen den Verdampferwänden und der kryogenen Flüssigkeit mittels im Innern eines Zirkulationsinnenvolumens (V; V') der bzw. jeder kryogenen Flüssigkeit vorgesehenen Elementen (30, 38) erhöht wird.

2. Verfahren nach Anspruch 1, **dadurch gekennzeichnet, dass** die Flüssigkeit im Verdampfer ganz verdampft.

3. Verfahren nach einem der Ansprüche 1 oder 2, bei dem die bzw. jede kryogene Flüssigkeit in einer Entnahmelinie (8; 18) vorzugsweise so zirkuliert, dass die bzw. jede Flüssigkeit die Linie im Wesentlichen steigend durchläuft und/oder
- die Entnahmelinie thermisch isoliert wird und/oder
- der Durchsatz der Gasphase (mit 52) kontrolliert wird.

4. Anlage zur Stichprobenentnahme von mindestens einer Verunreinigungen wie z.B. Distickstoffoxid, Kohlenstoffdioxid oder Kohlenwasserstoffe enthaltenden kryogenen Flüssigkeit, insbesondere Sauerstoff oder Stickstoff, bestehend aus:
- einer Entnahmelinie (8; 18), in deren Innern die bzw. jede kryogene Flüssigkeit zirkuliert, wobei die Entnahmelinie an eine Zirkulationslinie (4; 16) der bzw. jeder kryogenen Flüssigkeit angeschlossen werden kann, und die vorzugsweise so angeordnet ist, dass die Zirkulation der Flüssigkeit in Bezug auf die Strömungsrichtung (f) der kryogenen Flüssigkeit im Wesentlichen steigend erfolgt,
- gegebenenfalls Mitteln (20) zur thermischen Isolierung der Entnahmelinie (8; 18)
- einem Verdampfer (22; 34), der mit der Entnahmelinie (8; 18) so verbunden ist, dass die bzw. jede Flüssigkeit den Verdampfer im Wesentlichen fallend durchläuft,
- Mitteln zum Halten der mit der bzw. jeder kryogenen Flüssigkeit in Berührung kommenden Verdampferwände auf einer Temperatur, die höher ist als die Sublimations- bzw. Verdampfungstemperatur der in der Flüssigkeit enthaltenen am wenigsten flüchtigen Verunreinigung mittels Wärmeaustausch mit der freien Luft,
- Mitteln (46) zum Ablassen nach dem Verdampfer (22; 34) einer Gasphase aus der Verdampfung der bzw. jeder kryogenen Flüssigkeit, wobei diese Ablassmittel mit einem Analysator (54) verbunden werden können, und
- Mitteln (52) zur Kontrolle des Gasphasendurchsatzes,
**dadurch gekennzeichnet, dass** der Verdampfer (22; 34) mit Mitteln (32; 42) zur Erhöhung des Wärmeaustauschs zwischen seinen Wänden und der freien Luft versehen ist,
dass die Wände des Verdampfers (22; 34) ein Zirkulationsinnenvolumen (V; V') der bzw. jeder kryogenen Flüssigkeit definieren und dass in diesem Innenvolumen Mittel (33, 38) zur Erhöhung des Wärmeaustauschs zwischen der kryogenen Flüssigkeit und der Wände vorgesehen sind.

5. Anlage nach Anspruch 4, **dadurch gekennzeichnet, dass** der Verdampfer Behinderungen (30) der vertikalen Strömung, die vorzugsweise die Ansammlung der Flüssigkeit verhindern, umfasst.

6. Anlage nach Anspruch 5, bei der die Behinderungen (30) Bestandteil der Verdampferwände sind oder mit diesen in thermischem Kontakt stehen.

7. Lufttrennanlage mit mindestens einer Destilliersäule (2), von der mindestens eine Zirkulationslinie (4; 16) mindestens einer kryogenen Flüssigkeit abgeht, und einer Anlage zur Stichprobenentnahme nach einem der Ansprüche 4 bis 6, wobei mindestens eine der Zirkulationslinien mit der Anlage zur Stichprobenentnahme verbunden ist.

8. Trennanlage nach Anspruch 7, **dadurch gekennzeichnet, dass** die Zirkulationslinie (4) einer Pumpe (6) nachgeschaltet ist oder dass die Zirkulationslinie (16) eine Entlüftungslinie ist.
